# EUROPEAN PATENT SPECIFICATION

(11) **EP 1 169 765 B1**
(45) Date of publication and mention of the grant of the patent: **28.12.2005**
(21) Application number: 00911252.5
(22) Date of filing: 07.03.2000
(51) Int. Cl.: H02K 1/16

(54) **BRUSHLESS SYNCHRONOUS ELECTRIC MOTOR**
BÜRSTENLOSER SYNCHRONMOTOR
MOTEUR ELECTRIQUE SYNCHRONE SANS BALAIS

(30) Priority: 09.04.1999 IT RE990043
(43) Date of publication of application: 09.01.2002
(73) Proprietor: Motor Power Company S.r.l., 42024 Castelnovo Sotto (RE) (IT)
(72) Inventor: FELICI, Lorenzo, I-42021 Bibbiano (IT); ANCESCHI, Stefano, I-42100 Reggio Emilia (IT)
(74) Representative: Lanzoni, Luciano
(86) International application number: PCT/IT2000/000074
(87) International publication number: WO 2000/062400

(56) References cited:
- EP-A- 0 283 110
- CH-A- 433 503
- DE-A- 3 704 226
- DE-B- 1 186 547
- US-A- 2 830 209

## Description

### Technical field

The present invention relates to a brushless synchronous electric motor.

In a specific, but not exclusive manner, the present invention may be used, in an automatic machine or a robot system, in order to operate a movable mechanical component such as, for example, a spindle or a manipulator.

In particular, reference is made to a brushless synchronous electric motor comprising a stator and a rotor housed in the centre of the stator; the stator has internally a plurality of slots which house a stator electric winding; the slots extend lengthwise in a direction parallel to the rotor axis and are distributed circumferentially around the rotor.

### Background art

Motors of the abovementioned type, in which the rotor has peripherally permanent magnets surrounded coaxially by an air gap, are widely known. The latter separates the rotor from a stator magnetic circuit comprising a pack of laminations having, formed in them, the slots housing the stator electric winding.

In known motors, the slots are distributed uniformly, in a circumferential direction with respect to the rotor, at a constant interval, over a complete circumference of 360°. Generally, the known motors have a stator with a square or circular cross-section. Motors of this type are already used for the operation of movable components of automatic machines or robot systems. Normally, in these cases, it is envisaged that the motor performs variable-speed work cycles with frequent reversals in the direction of rotation of the rotor, the motor being supplied with power by means of an electronic driver. Therefore, the motor must be able to provide high torques and a high mechanical power output in a non-continuous operating condition. For this purpose it is necessary to use motors having relatively large dimensions. Generally, both in order to limit the inertia of the rotating masses, and in order to contain the frontal dimensions (heightwise and widthwise) of the motor, it is preferable to construct motors extending lengthwise in a direction parallel to the rotor axis, rather than motors extending in a direction transverse to the said axis.

One of the drawbacks of the known motors of the type described above consists in the fact that, if the maximum power required is high, the motor needed to generate this power must have frontal dimensions, namely in a plane perpendicular to the rotor axis, which are relatively large. However, in certain situations (for example in an automatic machine or a robot system) the space available for mounting the motor may be limited, while the maximum overload power required is high. Consequently, it is not possible to reduce, beyond a certain limit, the dimensions of an automatic machine or a robot system which uses an electric servomotor of the abovementioned type, since the servomotor must in any case have fairly large frontal dimensions, otherwise it will be unable to provide the power required.

### Disclosure of the invention

The object of the present invention is to overcome the abovementioned drawback of the known art by means of a brushless synchronous electric motor according to claim 1 and having relatively small dimensions in relation to the maximum peak power which can be output.

One advantage of the invention is to provide a motor able to provide a relatively high maximum torque in relation to its volume.

Another advantage of the invention consists in the fact that it is simple and inexpensive to manufacture and use.

### Brief description of the drawings

The characteristic features and advantages of the present invention will emerge more clearly from the following detailed description of some preferred, but not exclusive embodiments of the said invention, illustrated purely by way of a non-limiting example in the accompanying drawings in which:
Figure 1 shows a cross-sectional view of a first example of embodiment along a longitudinal plane;
Figure 2 shows a profile or frontal view of the motor according to Figure 1;
Figure 3 shows a diagram of the stator electric winding of the motor according to Figures 1 and 2;
Figure 4 shows a cross-sectional view of a first example of embodiment along a plane perpendicular to the motor axis, indicated by the line V-V;
Figure 5 shows a cross-sectional view of a second example of embodiment along the plane indicated by V-V in Figure 1.

### Detailed description of the preferred embodiment(s)

With reference to the abovementioned figures, 1 denotes in its entirety a brushless synchronous electric motor comprising a stator 2 and a rotor 3 housed in the centre of the stator. The motor 1 may be advantageously used to operate the moving parts of an automatic machine and/or a robot system.

The stator 2 has internally a plurality of slots 4 which house a stator electric winding 5. The slots 4 extend lengthwise in a direction parallel to the axis x-x of the rotor and are distributed circumferentially around the rotor 3.

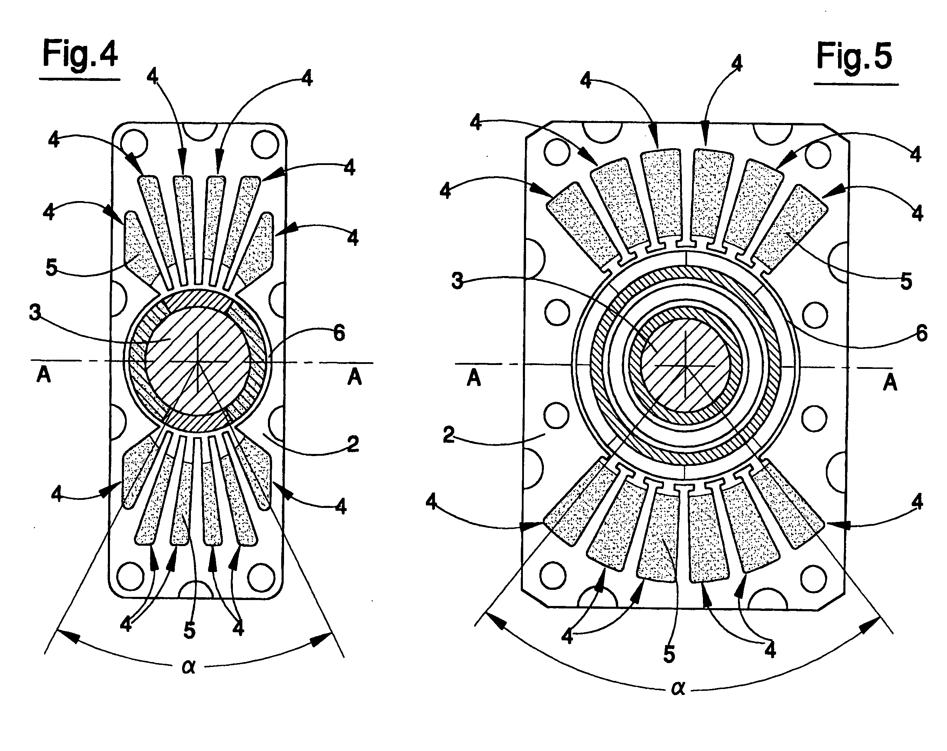

The slots 4 are arranged within two arcs of a circumference, each having an amplitude smaller than a flat angle and being situated on diametrically opposite sides with respect to the axis x-x of the rotor. Preferably the amplitude of each of the two arcs of a circumference is equivalent to about a whole fraction of the flat angle. In the case of Figure 4, the mechanical (i.e. geometrical) amplitude α of each arc is 60°. In the case of Figure 5, which will be described in more detail below, this amplitude α is equal to 90°. In another example, not shown, the amplitude α may be 45°.

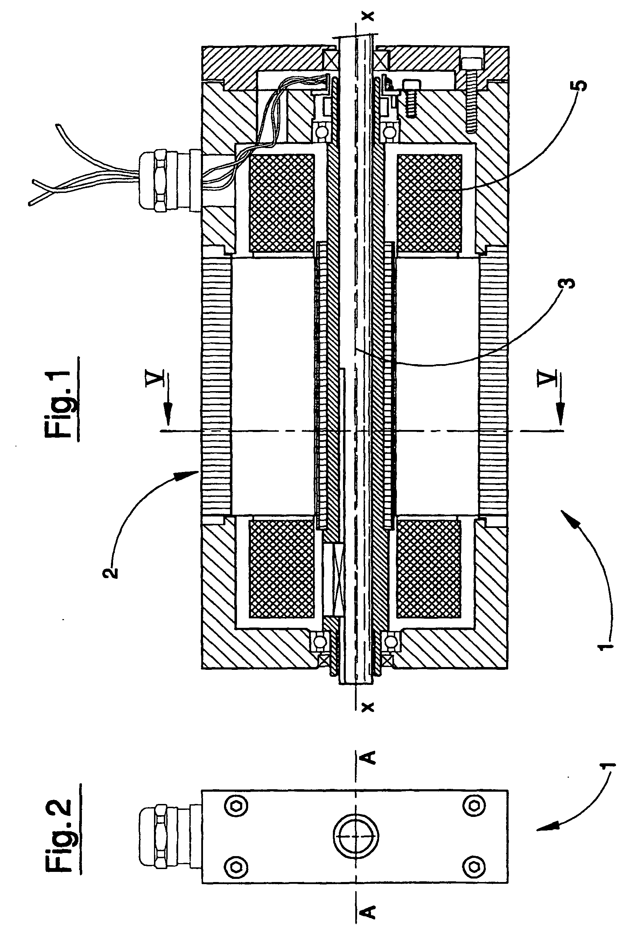

The stator 2 has, viewed in cross-section, along a right-angled cross-sectional plane with respect to the axis x-x of the rotor (see Figure 1), one dimension which is substantially smaller than the other one. In particular, the stator 2 has a substantially rectangular shape, viewed in cross-section (see Figure 2). The short side of the rectangular section of the stator has a length slightly greater than the external diameter of an air gap 6 separating the rotor 3 and the stator 2.

The arcs of a circumference inside which the slots 4 are arranged are situated on opposite sides with respect to a longitudinal plane A-A passing through the axis x-x of the rotor and parallel to the smaller dimension of the stator 2. The thickness of the stator, considered in a radial direction with respect to the axis x-x of the rotor, is minimal in two zones of the stator located in the vicinity of the abovementioned longitudinal plane A-A, as can be seen from Figures 2, 4 and 5. These parts of the stator 2 face the air gap 6 separating the rotor and the stator. These parts have a very small thickness which may be, if necessary, the minimum thickness necessary for ensuring continuity of the magnetic circuit of the stator 2.

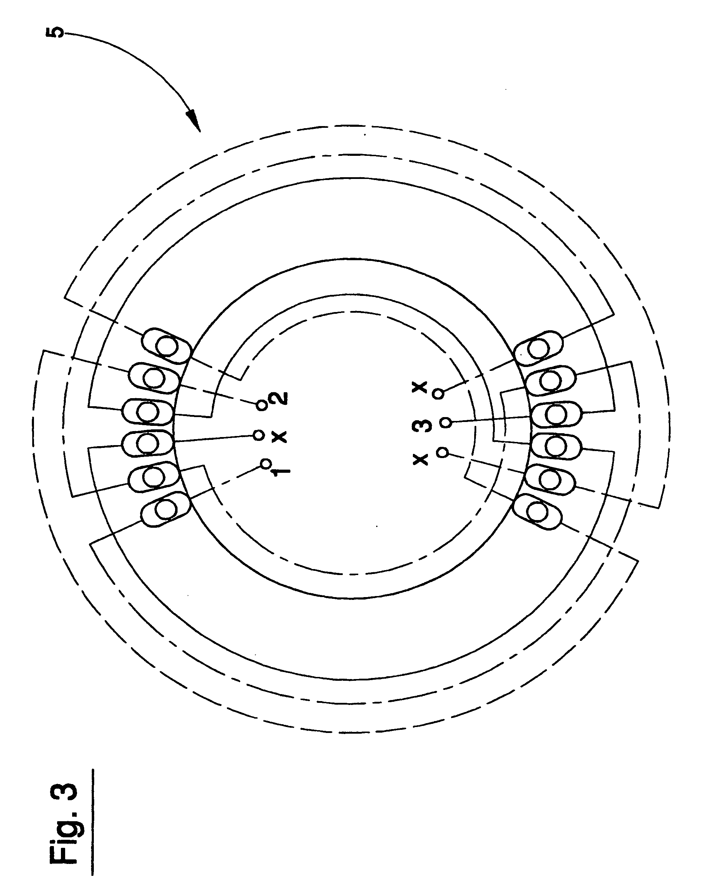

The stator 2 comprises a pack of rectangular laminations, having twelve slots distributed over two facing arcs, i.e. six slots for each arc. Each arc has an angular amplitude of 60° and is diametrically opposite, with respect to the rotor axis, to the other arc of slots. The slots in the lamination are designed to receive the three-phase winding 5 schematically shown in Figure 3. The winding 5 has voltages which are phase-displaced by 120° with respect to each other. Each phase of the stator winding is associated with four slots, with two slots for each phase pole.

The rotor is constructed so as to form six magnetic poles. It is possible to drive the motor with brushless operation of the known type, using Hall sensors positioned in accordance with the structure of a brushless motor with six poles of the known type.

The motor 1 has a small width, although being able to provide a relatively high peak power. In particular, it has been found that the motor 1 is able to achieve peak torques nearly the same as those of an electric motor of the known type with six stator poles and six rotor poles, having substantially the same rotor diameter and the same heightwise and lengthwise dimensions as the motor described above, but with larger dimensions widthwise owing to the fact that the slots for housing the stator are distributed over 360° around the rotor axis. Comparing the motor according to Figures 1 to 3 with the known motor described above, the continuous power output by the former is about one third that output by the latter, while the peak power in an overload condition which may be output by the first motor is practically the same as or in any case slightly smaller than that which may be output by the second motor; this is apparently due to the fact that the rotor diameter is the same in both cases. In applications where it is required to have a high non-continuous peak power output rather than a high continuous power output (for example in order to operate the moving parts of an automatic machine or a robot system), the first motor offers the advantage of having frontal dimensions which are decidedly smaller. In the example according to Figure 5 the same numbers as in Figure 4 have been used to indicate similar parts. The rotor 3 has eight magnetic poles. The stator lamination pack has twelve slots 4 distributed in two groups of six situated opposite with respect to the axis x-x of the rotor 3. Each group of slots is arranged around the rotor 3 with an arc of a circumference having an amplitude α equal to 90°.

With the motor 1 according to Figure 5, it is possible to obtain about half the continuous power, but peak torques nearly the same as those of an electric motor of the known type with eight stator poles and eight rotor poles, having the same rotor diameter and slots for housing the stator electric circuit distributed around 360°. In this case also, the widthwise dimensions of the motor in question are smaller than those of the motor of the known type able to output the same peak power.

## Claims

1. Brushless synchronous electric motor comprising a stator (2) and rotor (3) housed in the centre of the stator, the stator having internally a plurality of slots (4), extending lengthwise in a direction parallel to the axis (x-x) of the rotor and being distributed circumferentially around the rotor (3), the slots (4) housing a stator electric winding (5) and being arranged within two arcs of a circumference, each having an amplitude (α) smaller than a flat angle and being situated on diametrically opposite sides with respect to the axis (x-x) of the rotor,
**characterized in that** the amplitude (α) of each of the two arcs of a circumference is equal to a whole fraction of the flat angle.

2. Motor according to Claim 1, **characterized in that** the stator (2) has, viewed in cross-section, along a right-angled cross-sectional plane (A-A) with respect to the axis (x-x) of the rotor, one dimension smaller than the other one; the arcs of a circumference inside which the slots (4) are arranged being situated on opposite sides with respect to a plane (A-A) passing through the axis (x-x) of the rotor and parallel to the smaller dimension of the stator.

3. Motor according to any one of the preceding claims, **characterized in that** the arcs of a circumference inside which the slots (4) are arranged are situated on opposite sides with respect to a plane (A-A) passing through the axis (x-x) of the rotor; the thickness of the stator (2), considered in a radial direction with respect to the axis (x-x) of the rotor, being minimal in two zones of the stator situated in the vicinity of said plane (A-A).

4. Motor according to any one of the preceding claims, **characterized in that** the stator (2) has, viewed in cross-section, along a right-angled cross-sectional plane with respect to the axis (x-x) of the rotor, a rectangular shape.

5. Motor according to Claim 4, **characterized in that** the short side of the rectangular section of the stator (2) has a length slightly greater than the external diameter of an air gap (6) separating the rotor and the stator.

## Revendications

1. Moteur électrique synchrone sans balais comprenant un stator (2) et un rotor (3) logé au centre du stator, le stator présentant en son intérieur une pluralité de gorges (4) s'étendant longitudinalement dans une direction parallèle à l'axe (x-x) du rotor et étant distribuées de manière circonférentielle autour du rotor (3), les gorges (4) accueillant un bobinage électrique statorique (5) et étant disposées à l'intérieur de deux arcs de circonférence, chacun d'entre eux ayant une amplitude (α) inférieure à un angle plat et tous deux étant situés sur des côtés diamétralement opposés par rapport à l'axe (x-x) du rotor,
**caractérisé en ce que** l'amplitude (α) de chacun des deux arcs de circonférence est égale à une entière fraction de l'angle plat.

2. Moteur selon la revendication 1, **caractérisé en ce que** le stator (2) présente, vu en section transversale, le long d'un plan (A-A) de section transversale à angle droit par rapport à l'axe (x-x) du rotor, une dimension inférieure à l'autre; les arcs de circonférence à l'intérieur desquels les fentes (4) sont disposées étant situés sur des côtés opposés par rapport à un plan (A-A) passant par l'axe (x-x) du rotor et étant parallèle à la dimension inférieure du stator.

3. Moteur selon n'importe laquelle des revendications précédentes, **caractérisé en ce que** les arcs de circonférence à l'intérieur desquels les gorges (4) sont disposées sont situés sur des côtés opposés par rapport à un plan (A-A) passant par l'axe (x-x) du rotor; l'épaisseur du stator (2), considérée dans une direction radiale par rapport à l'axe (x-x) du rotor, étant minimale en deux zones du stator situées à proximité dudit plan (A-A).

4. Moteur selon n'importe laquelle des revendications précédentes, **caractérisé en ce que** le stator (2) présente, vu en section transversale, le long d'un plan de section transversale à angle droit par rapport à l'axe (x-x) du rotor, une forme rectangulaire.

5. Moteur selon la revendication 4, **caractérisé en ce que** le côté inférieur de la section rectangulaire du stator (2) présente une longueur légèrement supérieure au diamètre externe d'un entrefer (6) séparant le rotor et le stator.

## Patentansprüche

1. Bürstenloser elektrischer Synchronmotor, enthaltend einen Stator (2) und einen Rotor (3), letzterer aufgenommen in der Mitte des Stators, wobei der Stator im Inneren eine Anzahl von Schlitzen (4) aufweist, die sich der Länge nach in einer Richtung parallel zu der Achse (x-x) des Rotors erstrecken und umlaufend um den Rotor verteilt sind, wobei die Schlitze (4) eine elektrische Statorwicklung (5) aufnehmen und innerhalb von zwei Umfangsbögen angeordnet sind, von denen jeder eine Weite (α) hat, die geringer ist als ein flacher Winkel, und die im Verhältnis zu der Achse (x-x) des Rotors auf sich diametral gegenüberliegenden Seiten angeordnet sind, **dadurch gekennzeichnet, dass** die Weite (α) eines jeden der beiden Umfangsbögen einem ganzen Bruchteil des flachen Winkels entspricht.

2. Motor nach Patentanspruch 1, **dadurch gekennzeichnet, dass** der Stator (2), im Querschnitt gesehen, entlang einer rechtwinkligen Querschnittebene (A-A) im Verhältnis zu der Achse (x-x) des Rotors eine Abmessung kleiner als die andere hat, wobei die Umfangsbögen, innerhalb welcher die Schlitze (4) angeordnet sind, sich auf entgegengesetzten Seiten im Verhältnis zu einer Ebene (A-A) befinden, die durch die Achse (x-x) des Rotors und parallel zu der kleineren Abmessung des Stators verläuft.

3. Motor nach einem beliebigen der vorstehenden Patentansprüche, **dadurch gekennzeichnet, dass** die Umfangsbögen, innerhalb welcher die Schlitze (4) angeordnet sind, sich auf entgegengesetzten Seiten im Verhältnis zu einer durch die Achse (x-x) des Rotors verlaufenden Ebene (A-A) befinden; wobei die Dicke des Stators (2), berücksichtigt in einer radialen Richtung im Verhältnis zu der Achse (x-x) des Rotors, minimal in zwei Bereichen des Stators ist, die sich in der Nähe der genannten Ebene (A-A) befinden.

4. Motor nach einem beliebigen der vorstehenden Patentansprüche, **dadurch gekennzeichnet, dass** der Stator (2), im Querschnitt gesehen, entlang einer rechtwinkligen Querschnittsebene im Verhältnis zu der Achse (x-x) des Rotors eine rechtwinklige Form hat.

5. Motor nach Patentanspruch 4, **dadurch gekennzeichnet, dass** die kurze Seite des rechtwinkligen Abschnittes des Stators (2) eine Länge hat, die leicht grösser ist als der Aussendurchmesser eines Luftspaltes (6), welcher den Rotor und den Stator voneinander trennt.
